# EUROPÄISCHE PATENTSCHRIFT

(11) **EP 1 131 149 B1**
(45) Veröffentlichungstag und Bekanntmachung des Hinweises auf die Patenterteilung: **15.10.2003**
(21) Anmeldenummer: 99944492.0
(22) Anmeldetag: 24.08.1999
(51) Int. Cl.: B01D 46/42, B01D 35/12, F16K 31/60, F16K 35/02

(54) **Filteranordnung mit mindestens zwei Filterkammern**
Filter arrangement with at least two filter chambers
Dispositif filtrant doté d'au moins deux chambres filtrantes

(30) Priorität: 06.11.1998 DE 19851193
(43) Veröffentlichungstag der Anmeldung: 12.09.2001
(73) Patentinhaber: Hydac Filtertechnik GmbH, 66280 Sulzbach/Saar (DE)
(72) Erfinder: FREIDINGER, Martin, D-66130 Saarbrücken (DE)
(74) Vertreter: Patentanwälte Bartels und Partner
(86) Internationale Anmeldenummer: EP9906194
(87) Internationale Veröffentlichungsnummer: WO00027502

(56) Entgegenhaltungen:
- EP-A- 0 569 931
- DE-A- 4 011 419

## Beschreibung

Die Erfindung bezieht sich auf eine Filteranordnung mit mindestens zwei Filterkammern, die durch Betätigen eines in entsprechende Schaltstellungen steuerbaren Umschaltventiles abwechselnd beaufschlagbar sind, dessen drehbares Ventilteil mit einem einen manuell handhabbaren Griffteil aufweisenden Umschalthebel auf Drehung verbunden ist, mit einem Ausgleichsventil, das für einen Druckausgleich zwischen den Filterkammern betätigbar ist, und mit einer Arretiervorrichtung, die in eine die Drehbewegung des Ventilteiles blockierende Riegelstellung und in Abhängigkeit vom Betätigen des Ausgleichsventiles in eine die Drehbewegung des Ventilteiles ermöglichende Freigabestellung überführbar ist.

In dem Bestreben, eine Einhandbetätigung einer derartigen Filteranordnung zu ermöglichen, also zu vermeiden, daß eine Bedienungsperson beim Umschalten beide Hände benötigt, nämlich die eine, um den Umschalthebel zu drehen, und die zweite, um die Arretiervorrichtung in der Freigabestellung zu halten, ist bei einer in der DE 40 11 419 C2 gezeigten, bekannten Filteranordnung ein Betätigungsglied der Arretiervorrichtung am Umschalthebel in der Weise beweglich gelagert, daß dieses Betätigungsglied bei Ergreifen des Griffteiles des Umschalthebels gleichzeitig mit ergriffen und in die der Freigabestellung der Arretiervorrichtung entsprechende Stellung bewegt werden kann.

Bei der bekannten Filteranordnung muß der Vorteil der Möglichkeit der Einhandbedienung durch eine aufwendige und sperrige Bauweise des Umschalthebels erkauft werden, an dessen Griffteil das Betätigungsglied der Arretiervorrichtung als zusätzliches Bauteil beweglich angeordnet und durch eine Federanordnung in die der Riegelstellung der Arretiervorrichtung entsprechende Stellung vorgespannt ist.

Der Erfindung liegt die Aufgabe zugrunde, eine derartige Filteranordnung zu schaffen, die sich gegenüber der bekannten Anordnung durch eine vereinfachte Bauweise auszeichnet.

Erfindungsgemäß ist diese Aufgabe bei einer Filteranordnung der eingangs genannten Art dadurch gelöst, daß der Umschalthebel in Form eines zweiarmigen Schwenkhebels ausgebildet und am Ventilteil mit zu dessen Drehachse senkrechter Schwenkachse so gelagert ist, daß sein vom Griffteil abgewandter Hebelarm bei der Schwenkbewegung das Ausgleichsventil betätigt, und daß der den Griffteil bildende zweite Hebelarm bei der das Ausgleichsventil betätigenden Schwenkbewegung des Umschalthebels die Arretiervorrichtung aus der Riegelstellung in die Freigabestellung überführt.

Dadurch, daß erfindungsgemäß als Umschalthebel ein zweiarmiger Schwenkhebel vorgesehen ist, der mit dem Ventilteil des Umschaltventiles nicht nur auf Drehung verbunden, sondern relativ zum Ventilteil auch schwenkbeweglich ist, erfüllt der Umschalthebel, obgleich er ein einteiliges Bauteil darstellt, eine dreifache Funktion. Dies ist zum einen die Umschaltfunktion für das Umschaltventil durch Drehen von dessen Ventilteil. Zum zweiten bewirkt die relativ zum Ventilteil erfolgende Schwenkbewegung, daß der Umschalthebel mit dem den Griffteil bildenden zweiten Hebelarm die Arretiervorrichtung entriegelt, während gleichzeitig der andere Hebelarm als dritte Funktion das Ausgleichsventil betätigt. Mit anderen Worten gesagt, ermöglicht die Erfindung die Einhandbetätigung bei einteiliger Ausbildung des Umschalthebels, also ohne an diesem beweglich angeordnetes, federbelastetes Betätigungsglied, wie dies bei der erwähnten, bekannten Filteranordnung für die Zusammenwirkung mit der Arretiervorrichtung und mit dem Ausgleichsventil erforderlich ist.

Bei einem bevorzugten Ausführungsbeispiel weist die Arretiervorrichtung eine vom Griffteil des Umschalthebels gegen das Gehäuse der Filteranordnung vorspringende Arretiernase auf, die bei beiden Schaltstellungen des Umschaltventils an je einem am Filtergehäuse ausgebildeteten Anschlag formschlüssig anliegt und bei der das Ausgleichsventil betätigenden Schwenkbewegung des Umschalthebels vom betreffenden Anschlag freikommt.

Vorzugsweise ist die Anordnung so getroffen, daß der vom Griffteil abgewandte, zum Betätigen des Ausgleichsventiles vorgesehene Hebelarm des Umschalthebels auf einen Ventilstößel des Ausgleichsventiles einwirkt. Dieser kann zur kraftschlüssigen Anlage am zugeordneten Hebelarm des Umschalthebels durch eine Federanordnung vorgespannt sein, durch die der Umschalthebel gleichzeitig in die der Riegelstellung der Arretiervorrichtung entsprechende Schwenkstellung gedrängt wird.

Nachstehend ist die Erfindung anhand der Zeichnung im einzelnen erläutert. Es zeigen:
- Fig. 1: eine abgebrochen, teils aufgebrochen und schematisch vereinfacht dargestellte Vorderansicht eines Ausführungsbeispieles der erfindungsgemäßen Filteranordnung und
- Fig. 2 und 3: Teilquerschnitte entsprechend der Schnittlinie II-II von Fig. 1, Wobei Fig. 2 den Betriebszustand einer Schaltstellung ohne Betätigung des Ausgleichsventiles und Fig. 3 die gleiche Schaltstellung mit betätigtem Ausgleichsventil zeigen.

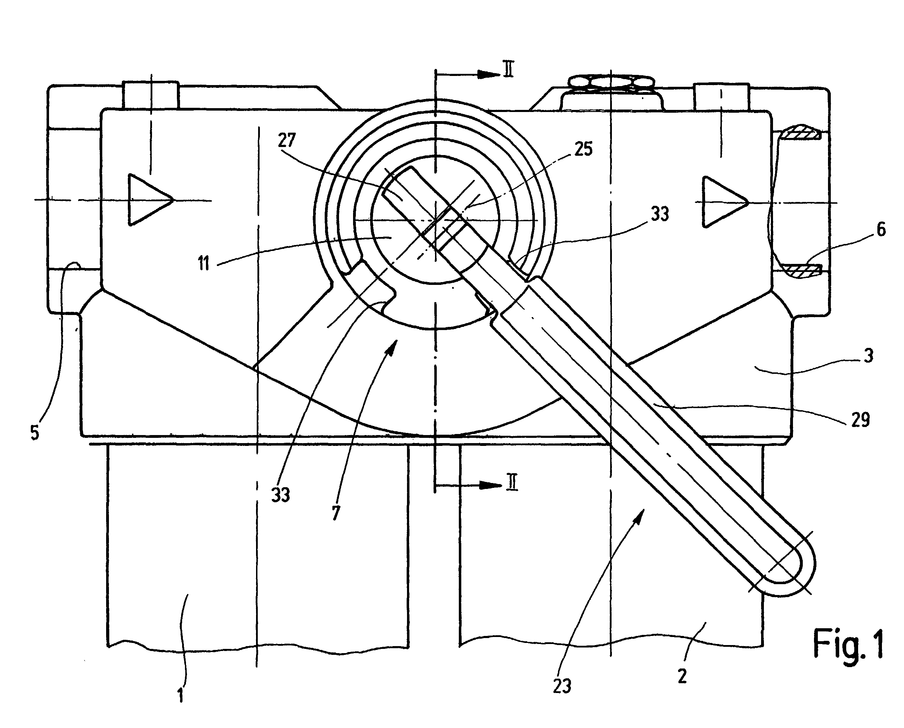

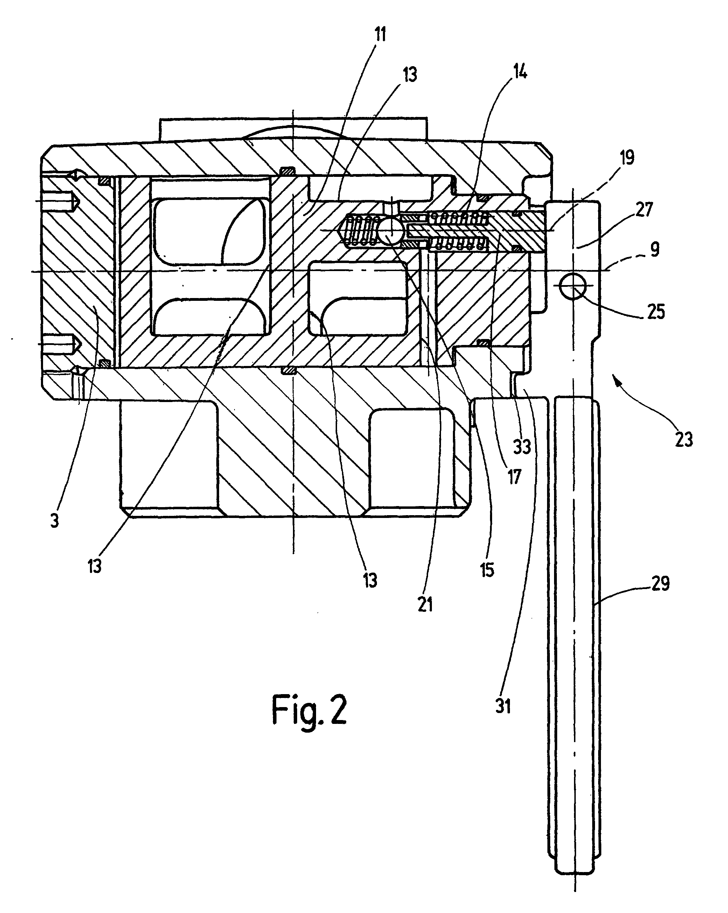

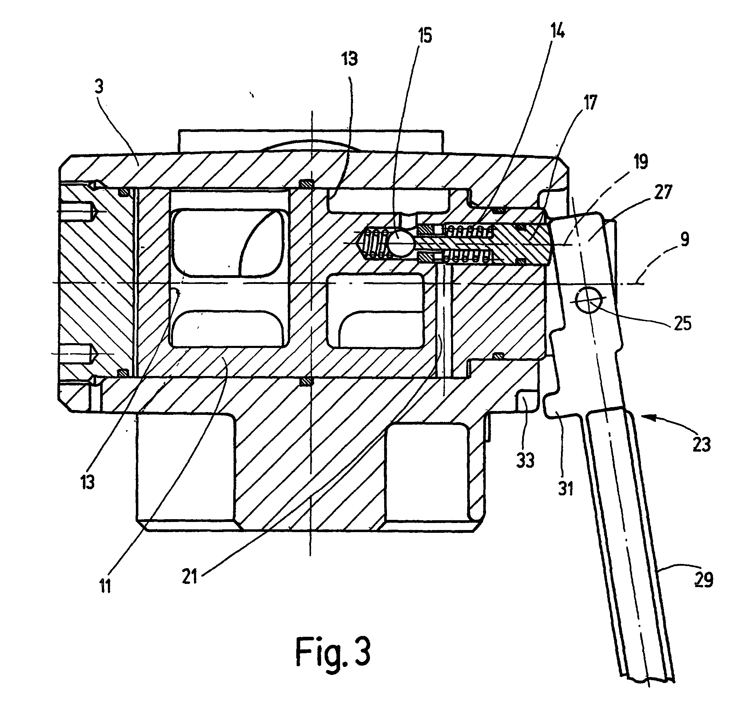

Fig. 1 zeigt den oberen Teil einer Filteranordnung mit zwei Filterkammern 1 und 2 und einem oberen Gehäuse 3, das Anschlüsse 5 und 6 für Zu- bzw. Ablauf des zu filternden Mediums aufweist. Außerdem ist im Gehäuse 3 eine als Ganzes mit 7 bezeichnete Umschalteinrichtung vorgesehen, die es ermöglicht, wahlweise die Filterkammer 1 oder die Filterkammer 2 in Betrieb zu nehmen. Nähere Einzelheiten der Umschalteinrichtung 7 sind aus Fig. 2 und 3 ersichtlich.

Wie aus diesen Figuren zu ersehen ist, weist die Umschalteinrichtung ein Umschaltventil mit einem um eine Drehachse 9 drehbaren Ventilküken 11 auf, dessen Körper innere Ausnehmungen 13 besitzt, um je nach Drehstellung den Strömungsweg durch die Filterkammer 1 oder die Filterkammer 2 hindurch freizugeben. Außerdem ist in den Körper des Ventilkükens 11 ein Ausgleichsventil 15 in Form eines federbelasteten Kugelventils integriert, das mittels eines ebenfalls mittels einer Feder 14 vorgespannten Ventilstößels 17 betätigbar ist, wenn dieser gegen die Kraft der Feder 14 in Längsrichtung verschoben wird, wobei die Achse 19 dieser Verschiebebewegung im Abstand von der Drehachse 9 des Ventilkükens parallel zu dieser verläuft.

Fig. 2 zeigt das Ausgleichsventil 15 im unbetätigten Sperrzustand. Fig. 3 zeigt das Ausgleichsventil 15 im betätigten Zustand, wobei ein einen Druckausgleich zwischen den Filterkammern 1 und 2 gebender Strömungsweg 21 freigegeben ist.

Ein zur Betätigung der Umschalteinrichtung 7 vorgesehener, manuell handhabbarer Umschalthebel 23 ist am Ventilküken 11 so angeordnet, daß er mit diesem bezüglich der Drehbeweglichkeit um die Drehachse 9 auf Drehung verbunden ist, jedoch relativ zum Ventilküken 11 auch um eine zur Drehachse 9 senkrechte Schwenkachse 25 schwenkbar ist. Der Umschalhebel 23 bildet einen zweiarmigen Schwenkhebel mit einem kurzen Hebelarm 27 und einem langen Hebelarm, der als Griffteil 29 für die Handhabung des Umschalthebels 23 ausgebildet ist. Der kurze Hebelarm 27 liegt an der Außenseite des Stößels 17 des Ausgleichsventiles 15 an, wobei die Feder 14 den Kraftschluß zwischen Stößel 17 und Hebelarm 27 bewirkt, was zur Folge hat, daß der Umschalthebel 23 aufgrund dieser Federvorspannung normalerweise die in Fig. 2 gezeigte Schwenkstellung einnimmt, bei der sich das Ventilküken 11 der Umschalteinrichtung 7 in einer von zwei Schaltstellungen für den Betrieb einer der beiden Filterkammern 1 oder 2 befindet. Bei dieser Schwenkstellung des Umschalthebels 23 greift eine an der dem Gehäuse 3 zugekehrten Innenseite des Griffteiles 29 ausgebildete Arretiernase 31 in eine Arretierkerbe 33 an der Außenseite des Gehäuses 3 formschlüssig ein, um eine Drehung um die Drehachse 9 des Ventilkükens 11 zu blockieren.

Für das Umschalten der Umschalteinrichtung 7 ergreift die Bedienungsperson den Griffteil 29 des Umschalthebels 23 und schwenkt diesen gegen die Wirkung der Feder 14, die über den Stößel 17 auf den kurzen Hebelarm 27 einwirkt, in Richtung vom Gehäuse 3 weg, wobei die Arretiernase 31 aus der Kerbe 33 austritt. Gleichzeitig betätigt die Bewegung des Hebelarmes 27 das Ausgleichsventil 15 zur Herstellung des Druckausgleiches zwischen den Filterkammern 1 und 2. Bei ausgehobener Arretiernase 31 ist der Umschalthebel 23 nun freigegeben, um die Drehung des Ventilkükens 11 um die Drehachse 9 für den Umschaltvorgang durchzuführen. Wenn die Schaltstellung für den Betrieb der neuen Filterkammer 1 oder 2 erreicht ist, braucht der Griffteil 29 lediglich freigelassen zu werden, so daß die am Griffteil 29 des Umschalthebels 23 befindliche Arretiernase 31 in der neuen Schaltstellung wiederum unter Einwirkung der Feder 14 in die der neuen Schaltstellung zugeordnete Kerbe 33 einfällt. Somit nimmt der Umschalthebel 23 wieder die in Fig. 2 gezeigte, arretierte Schwenkstellung ein, in der das Ausgleichsventil 15 geschlossen ist.

## Patentansprüche

1. Filteranordnung mit mindestens zwei Filterkammern (1, 2), die durch Betätigen eines in entsprechende Schaltstellungen steuerbaren Umschaltventiles (7) abwechselnd beaufschlagbar sind, dessen drehbares Ventilteil (11) mit einem einen manuell handhabbaren Griffteil (29) aufweisenden Umschalthebel (23) auf Drehung verbunden ist, mit einem Ausgleichsventil (15), das für einen Druckausgleich zwischen den Filterkammern (1, 2) betätigbar ist, und mit einer Arretiervorrichtung (31, 33), die in eine die Drehbewegung des Ventilteils (11) blockierende Riegelstellung und in Abhängigkeit vom Betätigen des Ausgleichsventiles (15) in eine die Drehbewegung des Ventilteils (11) ermöglichende Freigabestellung überführbar ist, **dadurch gekennzeichnet, daß** der Umschalthebel (23) in Form eines zweiarmigen Schwenkhebels ausgebildet und am Ventilteil (11) mit zu dessen Drehachse (9) senkrechter Schwenkachse (25) so gelagert ist, daß sein vom Griffteil (29) abgewandter Hebelarm (27) bei der Schwenkbewegung das Ausgleichsventil (15) betätigt, und daß der den Griffteil (29) bildende zweite Hebelarm bei der das Ausgleichsventil (15) betätigenden Schwenkbewegung des Umschalthebels (23) die Arretiervorrichtung (31, 33) aus der Riegelstellung in die Freigabestellung überführt.

2. Filteranordnung nach Anspruch 1, **dadurch gekennzeichnet, daß** die Arretiervorrichtung eine am Griffteil (29) des Umschalthebels (23) vorgesehene Anschlagfläche (31) aufweist, die bei beiden Schaltstellungen des Umschaltventiles an je einem am Filtergehäuse (3) ausgebildeten Anschlag (33) formschlüssig anliegt und bei der das Ausgleichsventil (15) betätigenden Schwenkbewegung des Umschalthebels (23) vom betreffenden Anschlag (33) freikommt.

3. Filteranordnung nach Anspruch 2, **dadurch gekennzeichnet, daß** die Anschlagfläche am Griffteil (29) durch eine vorspringende Arretiernase (31) gebildet ist, die in jeder Schaltstellung mit einer den Anschlag bildenden Kerbe (33) am Filtergehäuse (3) zusammenwirkt.

4. Filteranordnung nach einem der Ansprüche 1 bis 3, **dadurch gekennzeichnet, daß** der vom Griffteil (29) abgewandte Hebelarm (27) des Umschalthebels (23) bei dessen Schwenkbewegung auf einen im Ventilteil (11) parallel zu dessen Drehachse (9) verschiebbaren Ventilstößel (17) zur Betätigung des Ausgleichsventiles (15) einwirkt.

5. Filteranordnung nach Anspruch 4, **dadurch gekennzeichnet, daß** der Ventilstößel (17) mittels einer der Ventil-Öffnungsbewegung des Stößels entgegenwirkenden Federanordnung (14) zur kraftschlüssigen Anlage am zugeordneten Hebelarm (27) des Umschalthebels (23) vorgespannt ist und diesen in die der Riegelstellung der Arretiervorrichtung (31, 33) entsprechende Schwenkstellung drängt.

6. Filteranordnung nach Anspruch 4 oder 5, **dadurch gekennzeichnet, daß** das drehbare Ventilteil als Ventilküken (11) ausgebildet ist, in dessen Körper das Ausgleichsventil integriert ist.

7. Filteranordnung nach Anspruch 6, **dadurch gekennzeichnet, daß** als Ausgleichsventil ein federbelastetes Kugelventil (15) vorgesehen ist.

## Claims

1. Filter arrangement with at least two filter chambers (1, 2) which can be fed by alternately switching a reversing valve (7) into the appropriate positions, the rotatable reversing valve element (11) of which is connected to a reversing lever (23) with a manually operated handle (29) to produce the rotary motion, with a compensating valve (15) which can be operated to balance pressure between the filter chambers (1, 2), and with a detent device (31, 33) which can be moved into a locking position blocking the rotary movement of the reversing valve element (11) and, in relation to the operation of the compensating valve (15), into a release position allowing the rotary movement of the valve element (11) to be performed, **characterised in that** the reversing lever (23) is designed in the form of a two-arm pivoted lever and mounted at the reversing valve element (11) with the swivel axis (25) vertical to its rotary axis (9) so that its lever arm (27) which is away from the handle part (29) operates the compensating valve (15) during the pivoting movement and that the second lever arm which forms the handle part (29) moves the detent device (31, 33) out of its locking position and into the release position during the pivoting movement of the reversing lever (23) operating the compensating valve (15).

2. Filter arrangement according to Claim 1, **characterised in that** the detent device has a stop face (31) at the handle part (29) of the reversing lever (23), which positively engages either stop (33) formed at the filter housing (3) in the two positions of the reversing valve and moves away from the respective stop (33) during the pivoting movement of the reversing lever (23) operating the compensating valve (15).

3. Filter arrangement according to Claim 2, **characterised in that** the stop face on the handle part (29) is formed by a protruding stop nose (31) which acts in conjunction with a notch (33) forming the stop on the filter housing (3) in each controlled position.

4. Filter arrangement according to one of the Claims 1 to 3, **characterised in that** the lever arm (27) of the reversing lever (23) away from the handle part (29) acts, during its pivoting movement, on a valve tappet (17) movable in the reversing valve element (11) parallel to its axis of rotation, to operate the compensating valve (15).

5. Filter arrangement according to Claim 4, **characterised in that** the valve tappet (17) is preloaded by means of a spring arrangement (14) acting against the valve opening movement of the tappet, to make a positive contact at the associated lever arm (27) of the reversing lever (23) and forcing it into the angular position appropriate for locking the locking device (31, 33).

6. Filter arrangement according to Claim 4 or 5, **characterised in that** the rotatable valve element is formed as a valve plug (11) within the body of which the compensating valve is integrated.

7. Filter arrangement according to Claim 6, **characterised in that** the compensating valve is a spring-loaded ball valve (15).

## Revendications

1. Dispositif de filtration comprenant au moins deux chambres de filtration (1, 2), pouvant être alimentées à tour de rôle par l'actionnement d'une soupape d'inversion (7), pouvant être commandée dans des positions de commutation correspondantes, dont la pièce de soupape (11) rotative est reliée par rotation à un levier de commutateur (23) présentant une pièce de prise (29) pouvant être actionnée à la main, comprenant une soupape de compensation (15), qui peut être actionnée pour une compensation de pressions entre les chambres de filtration (1, 2), et comprenant un dispositif d'arrêt (31, 33), qui peut être déplacé dans une position de verrouillage bloquant le mouvement de rotation de la pièce de soupape (11) et, en fonction de l'actionnement de la soupape de compensation (15), dans une position de libération permettant le mouvement de rotation de la pièce de soupape (11), **caractérisé en ce que** le levier de commutateur (23) est conçu sous la forme d'un levier de pivotement à deux bras et est logé sur la pièce de soupape (11), présentant un axe de pivotement (25) vertical par rapport à son axe de rotation (9), de telle sorte que son bras de levier (27) opposé à la pièce de prise (29) actionne la soupape de compensation (15) lors du mouvement de pivotement, et **en ce que** le second bras de levier formant la pièce de prise (29), lors du mouvement de pivotement du levier de commutateur (23) actionnant la soupape de compensation (15), déplace le dispositif d'arrêt (31, 33) de la position de verrouillage à la position de libération.

2. Dispositif de filtration selon la revendication 1, **caractérisé en ce que** le dispositif d'arrêt présente une surface de butée (31) prévue sur la pièce de prise (29) du levier de commutateur (23), surface qui est adjacente, dans les deux positions de commutation de la soupape d'inversion, à respectivement une butée (33) formée sur le boîtier de filtration (3) de manière mécanique et qui, lors du mouvement de pivotement du levier de commutateur (23), actionnant la soupape de compensation (15), se libère de la butée (33) en question.

3. Dispositif de filtration selon la revendication 2, **caractérisé en ce que** la surface de butée est formée sur la pièce de prise (29) par un taquet d'arrêt (31) faisant saillie, qui coopère dans chaque position de commutation avec une encoche (33) formant la butée sur le boîtier de filtration (3).

4. Dispositif de filtration selon l'une quelconque des revendications 1 à 3, **caractérisé en ce que** le bras de levier (27) du levier de commutateur (23), écarté de la pièce de prise (29), agit sur un poussoir de soupape (17), pouvant être déplacé dans une pièce de soupape (11) parallèlement à son axe de rotation (9), lors de son mouvement de pivotement, pour actionner la soupape de compensation (15).

5. Dispositif de filtration selon la revendication 4, **caractérisé en ce que** le poussoir de soupape (17) est prétendu au moyen d'un agencement de ressort (14), agissant à l'encontre du mouvement d'ouverture de la soupape du poussoir, pour l'installation commandée par ressort sur le bras de levier (27) associé du levier de commutateur (23) et déplace celui-ci dans la position de pivotement correspondant à la position de verrouillage du dispositif d'arrêt (31, 33).

6. Dispositif de filtration selon la revendication 4 ou 5, **caractérisé en ce que** la pièce de soupape rotative est conçue comme une noix de robinet de soupape (11), dans le corps de laquelle est intégrée la soupape de compensation.

7. Dispositif de filtration selon la revendication 6, **caractérisé en ce qu'**une soupape sphérique actionnée par ressort est prévue comme soupape de compensation.
